# EUROPEAN PATENT SPECIFICATION

(11) **EP 0 445 991 B1**
(45) Date of publication and mention of the grant of the patent: **07.06.1995**
(21) Application number: 91301741.4
(22) Date of filing: 01.03.1991
(51) Int. Cl.: B29C 51/30, B29C 51/36, B29C 44/00

(54) **Sheet-clamping device for mould**
Folienklemmeinrichtung für eine Form
Dispositif de serrage de feuille pour un moule

(30) Priority: 07.03.1990 GB 9005060
(43) Date of publication of application: 11.09.1991
(73) Proprietor: DUNLOP LIMITED, London SW1P 2PL (GB)
(72) Inventor: Rogers, David Michael, Harrogate, North Yorkshire (GB); Wilson, George Shepherd, Harrogate, North Yorkshire (GB)
(74) Representative: Sparrow, Alvar Alfred

(56) References cited:
- DE-A- 2 224 759
- DE-A- 3 739 843
- GB-A- 2 180 495
- US-A- 4 097 035
- US-A- 4 239 472

## Description

This invention relates to a sheet-clamping device for a mould and in particular to a sheet-clamping device for use in connection with a mould having a peripheral flange, such as a vacuum-mould. Vacuum-moulds of this type are used for the production of "trim-covered" articles, i.e. articles comprising a resilient core with an integral cover of a fabric or other sheet material, for instance seating, e.g. for use in motor vehicles. In the process of making such "trim-covered" articles, the fabric or other sheet material is laid across the cavity of the mould and, on application of a vacuum, is drawn into contact with the mould cavity surface. It is clearly necessary to provide some form of clamp around the periphery of the mould in order to permit controlled and uniform lining of the mould with the sheet material. It is also desirable that the peripheral clamp can be adjusted, so that undue bow and skew, "stretching" or "bunching", of the material within the mould cavity is avoided.

One form of such a sheet-clamping device according to the preamble of claim 1 is disclosed in the specification of our United Kingdom Patent No.GB-B-2180495. However, use of the clamping device disclosed as aforesaid can create moulding difficulties where (as is often the case) the fabric or other sheet material comprises one or more laminar layers and/or one or more different materials joined together in sheet form.

We have now found, according to the present invention, that differential clamping of a sheet material to be moulded can be achieved by the provision of a segmental friction-member and a clamping-member, together with means to vary the distance between the said two members.

Thus, the present invention provides a sheet-clamping device for use in connection with a mould having a peripheral flange, in which the device comprises:
a clamping-member for securement to the mould in overlying fixed spaced relationship to the mould flange;
a segmental friction-member connected to the clamping-member in variable distance relationship therewith, each friction-member segment providing a clamp face co-operable with a face of the mould flange to clamp therebetween a sheet to be moulded;
and means to vary the distance between any one or more of the friction-member segments and the clamping-member, thereby to vary the distance between the one or more friction-member segment clamp faces and the mould flange face;
whereby a differential clamping pressure may be exerted on a sheet at the mould flange to permit the sheet to slide in controlled manner between one or more friction-member segment clamp faces and the mould flange face during moulding of the sheet.

The present invention also provides a mould, especially a vacuum-mould, having a sheet-clarnping device as described in the immediately-preceding paragraph.

The present invention further provides a method of making an article comprising a moulded sheet wherein the sheet to be moulded is clamped across the mould-cavity of a mould, said method comprising clamping the sheet between the friction-member and the peripheral flange of the mould described in the immediately preceding paragraph and applying a controlled differential clamping pressure on the sheet at the mould flange by varying the distance between the clamping-member and one or more of the friction-member segments to permit the sheet to slide in controlled manner between one or more friction-member clamp faces and the mould flange face during moulding of the sheet.

The invention is especially useful for a vacuum-moulding process whereby the sheet is caused to slide between one or more friction-member segment clamp faces and the mould flange face under the force exerted on the sheet by the vacuum during the moulding process to draw the sheet into conformity with the mould cavity surface.

The invention is suitable for moulding elastic and inelastic sheets, which may be of, for instance, textile fabric and/or plastics, e.g. vinyl plastics, materials. Moulded trim-covered articles comprising a resilient core, such as of elastomeric foam, and an "integral" attached cover sheet material may be made advantageously in accordance with the invention. In making such articles having a foam core, a foam-forming reaction mixture may be placed on the moulded sheet in the mould and allowed or caused to react to form a resilient foam attached to the sheet. Examples of trim-covered articles which may be made using the invention are seating components, for instance in motor vehicle seating.

The clamping device advantageously should be positioned to be equidistantly spaced from the mould-parting line. The device may be simply clamped to the mould.

Typically the clamping member, which may be of substantially frame form, is equidistantly spaced from the mould flange and suitably the clamping-member, friction-member and mould flange face are in line with each other, usually vertically in line.

Suitably at least some, and preferably all, of the friction-member segment clamp faces are of material which permits a low coefficient of friction between the clamped sheet and the segment clamp face when the clamping pressure on the sheet is reduced by controlled reduction of the distance between one or more friction-member segments and the clamping member. Examples of friction-member clamp face materials are polished resin, polished metal and polytetrafluoroethylene (PTFE).

In a preferred embodiment of the present invention, the means to vary the distance between any one or more of the segments of the friction-member and the clamping-member may comprise a bolt to engage a segment of the friction-member and correspondingly to engage the clamping-member, together with a pair of co-operating lock-nuts to engage the bolt on each side of the clamping-member.

In order to accommodate variations in friction with the condition and thickness of the sheet at the clamp site and other factors of the moulding process, additional or alternative means may be provided to vary the clamping pressure of the friction-member in whole or in part. For instance, such means may comprise a series of "on-off" motors, e.g. air cylinders, positioned around the clamping-member to raise and lower friction-member segments selectively in the direction of the mould flange and thereby vary in controlled manner the clamping pressure on the sheet. The motors may be operated automatically according to a preprogrammed sequence.

The present invention will be illustrated, merely by way of example, in the following description and with reference to the accompanying drawings.

In the drawings (wherein like numerals denote like parts):

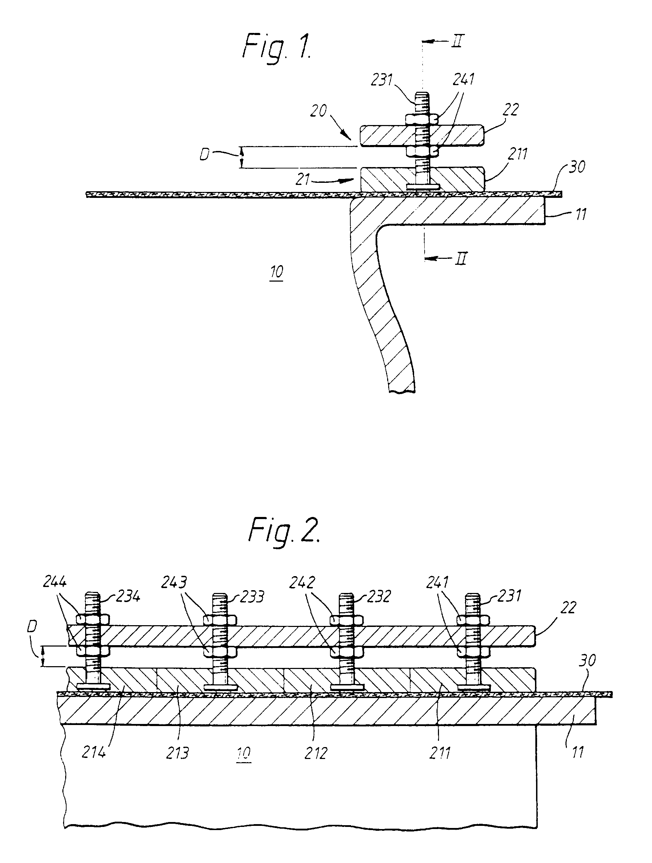

Figure 1 is a section through a portion of a mould including a sheet-clamping device according to the present invention;
Figure 2 is a section on line II-II of Figure 1.

Referring to the drawings, a mould cavity 10 has a peripheral flange 11. A sheet-clamping device 20 consists of a segmental friction-member 21 (four segments shown : 211, 212, 213 and 214) and a clamping-member 22. The clamping-member 22 is maintained vertically above the friction-member, at a variable distance D, by means of nut-and-bolt assemblies. Each said assembly comprises a bolt (four bolts shown: 231, 232, 233 and 234) which engages a counter-bored hole in its respective segment 211, 212, 213 and 214 of the friction-member and a corresponding hole in the clamping-member 22, together with a pair of co-operating lock-nuts (four pairs shown : 241, 242, 243 and 244 respectively).

The distance D between each segment of the friction-member and the clamping-member is varied by adjusting corresponding pairs of lock-nuts. Consequently, differential variation of the distance D will vary differentially the pressure exerted on a sheet material 30 clamped between the friction-member 21 and the flange 11.

## Claims

1. Sheet-clamping device for use in connection with a mould having a peripheral flange (11), said device comprising a clamping-member (22) for securement to the mould in overlying fixed spaced relationship to the mould flange (11), and a friction-member connected to the clamping-member (22) in variable distance relationship therewith,
characterised in that:
the friction member is a segmental friction member (21) wherein each friction-member segment (211, 212, 213, 214) provides a clamp face co-operable with a face of the mould flange to clamp therebetween a sheet (30) to be moulded; and there are provided means (231, 241; 232, 242; 233, 243; 234, 244) to vary the distance (D) between any one or more of the friction-member segments (211, 212, 213, 214) and the clamping-member (22), thereby to vary the distance between the one or more friction-member segment clamp faces and the mould flange face;
whereby a differential clamping pressure may be exerted on a sheet (30) at the mould flange (11) to permit the sheet to slide in controlled manner between one or more friction-member segment clamp faces and the mould flange face during moulding of the sheet.

2. Device according to Claim 1, in which at least some of the friction-member segment clamp faces are of material which permits a low coefficient of friction between the clamped sheet (30) and the segment clamp face when the clamping pressure on the sheet is reduced by controlled reduction of the distance between one or more friction-member segments (211, 212, 213, 214) and the clamping-member (22).

3. Device according to Claim 1 or 2, in which at least some of the friction-member clamp faces are of polished resin, polished metal or polytetrafluoroethylene.

4. Device according to any one of the preceding claims, in which the means to vary the distance between any one or more segments (211, 212, 213, 214) of the friction-member (21) and the clamping-member (22) comprises a bolt (231, 232, 233 234) to engage a segment (211, 212, 213, 214) of the friction-member (21) and correspondingly to engage the clamping-member (22), together with a pair of co-operating lock-nuts (241, 242, 243, 244) to engage the bolt (231, 232, 233, 234) on each side of the clamping-member (22).

5. Device according to any of the preceding claims, comprising additional means to vary the clamping pressure of the friction-member (21) in whole or in part.

6. Device according to Claim 5, in which the additional means comprise a series of 'on-off' motors positioned around the clamping-member (21) to raise and lower friction-member segments (211, 212, 213, 214) selectively in the direction of the mould flange (11).

7. Mould including a sheet-clamping device (20) according to any of the preceding claims.

8. Mould according to Claim 7, in which the sheet-clamping device (20) is positioned to be equidistantly spaced from the mould-parting line.

9. Method of making an article comprising a moulded sheet wherein the sheet (30) to be moulded is clamped across the mould-cavity (10) of a mould, said method comprising clamping the sheet (30) between a friction-member and the peripheral flange (11) of the mould,
characterised in that:
the method is performed using a mould according to Claim 7 or 8 and comprises applying a controlled differential clamping pressure on the sheet (30) at the mould flange (11) by varying the distance between the clamping-member (22) and one or more of the friction-member segments (211, 212, 213, 214) to permit the sheet (30) to slide in controlled manner between one or more friction-member segment clamp faces and the mould flange face during moulding of the sheet.

10. Method according to Claim 9, in which after the sheet (30) has been moulded a foam-forming reaction mixture is placed on the moulded sheet and is allowed or caused to react to form a resilient foam core attached to the sheet.

## Patentansprüche

1. Folienklemmvorrichtung zur Verwendung in Verbindung mit einer Form, die einen Umfangsflansch (11) aufweist, wobei die Vorrichtung ein Klemmelement (22) zur Befestigung an der Form über dem Formflansch (11) in einem festen Abstand und ein Reibungselement aufweist, das mit dem Klemmelement (22) in einem variablen Abstand von diesem verbunden ist,
**dadurch gekennzeichnet,**
daß das Reibungselement ein in Segmente unterteiltes Reibungselement (21) ist, wobei jedes Segment (211,212,213,214) des Reibungselementes eine Klemmfläche aufweist, die mit einer Fläche des Formflansches zusammenwirken kann, um dazwischen eine zu formende Folie oder Bahn (30) einzuklemmen, und daß Einrichtungen (231,241;232,242;233,243;234,244) vorgesehen sind, um den Abstand (D) zwischen einem oder mehreren der Segmente (211,212,213,214) des Reibungselementes und des Klemmelementes (22) zu variieren, wodurch der Abstand zwischen der einen oder mehreren Klemmflächen der Segmente des Reibungselementes und der Formflanschfläche verändert wird, wobei ein unterschiedlicher Klemmdruck auf eine Folie bzw. Bahn (30) auf dem Formflansch (11) ausgeübt werden kann, damit die Folie in kontrollierter Weise zwischen der einen oder mehreren Klemmflächen der Segmente des Reibungselementes und der Formflanschfläche während der Formgebung der Folie gleiten kann.

2. Vorrichtung nach Anspruch 1,
wobei wenigstens einige Klemmflächen der Segmente des Reibungselementes aus einen Material bestehen, das einen niedrigen Reibungskoeffizient zwischen der eingeklemmten Folie (30) und der Klemmfläche des Segmentes zuläßt, wenn der Klemmdruck auf der Folie durch gesteuerte Verringerung des Abstandes zwischen einem oder mehreren Segmenten (211,212,213,214) des Reibungselementes und des Klemmelementes (22) reduziert wird.

3. Vorrichtung nach Anspruch 1 oder 2,
wobei wenigstens einige der Klemmflächen des Reibungselementes aus poliertem Kunststoff, poliertem Metall oder polytetrafluoroethylen bestehen.

4. Vorrichtung nach einem der vorhergehenden Ansprüche, wobei die Einrichtung zum Verändern des Abstandes zwischen einem oder mehreren Segmenten (211,212,213,214) des Reibungselementes (21) und des Klemmelementes (22) einen Schraubenbolzen (231,232,233,234) für den Eingriff in ein Segment (211,212,213,214) des Reibungselementes (21) und in entsprechender Weise für den Eingriff in das Klemmelement (22) zusammen mit einem Paar von zusammenwirkenden Muttern (241,242,243,244) umfaßt, damit sie auf jeder Seite des Klemmelementes (22) mit dem Schraubenbolzen (231,232,233,234) in Eingriff stehen.

5. Vorrichtung nach einem der vorhergehenden Ansprüche, mit einer zusätzlichen Einrichtung zur Veränderung des Klemmdruckes des Reibungselementes (21) insgesamt oder zum Teil.

6. Vorrichtung nach Anspruch 5,
wobei die zusätzliche Einrichtung eine Reihe von Ein-Aus-Motoren umfaßt, die um das Klemmelement (21) angeordnet sind, um die Segmente (211,212,213,214) des Reibungselementes selektiv in der Richtung des Formflansches (11) anzuheben und abzusenken.

7. Form mit einer Folienklemmvorrichtung (20) nach einem der vorhergehenden Ansprüche.

8. Form nach Anspruch 7,
wobei die Folienklemmvorrichtung (20) so angeordnet ist, daß sie einen gleichbleibenden Abstand von der Formtrennlinie hat.

9. Verfahren zum Herstellen eines Artikels mit einer geformten Folie,
wobei die zu formende Folie (30) über den Formhohlraum (10) einer Form geklemmt wird, umfassend das Einklemmen der Folie (30) zwischen einem Reibungselement und dem Umfangsflansch (11) der Form,
**dadurch gekennzeichnet,**
daß das Verfahren ausgeführt wird unter Verwendung einer Form nach Anspruch 7 oder 8, daß das Verfahren weiterhin umfaßt das Anlegen eines gesteuert unterschiedlichen Klemmdruckes an der Folie (30) auf den Formflansch (11) durch Änderung des Abstandes zwischen dem Klemmelement (22) und einem oder mehreren der Segmente (211,212,213,214) des Reibungselementes, damit die Folie (30) in kontrollierter Weise zwischen einer oder mehreren Klemmflächen der Segmente des Reibungselementes und der Formflanschfläche während des Formens der Folie gleiten kann.

10. Verfahren nach Anspruch 9,
wobei nach dem Formen der Folie (30) ein schaumbildendes Reaktionsgemisch auf der geformten Bahn angeordnet wird und dieses zur Ausbildung eines nachgiebigen Schaumkerns, der an der Folie angebracht ist, reagieren gelassen wird oder zum Reagieren gebracht wird.

## Revendications

1. Dispositif de serrage de feuille destiné à être utilisé en relation avec un moule comportant un rebord périphérique (11), ledit dispositif comprenant un organe de serrage (22) destiné à être assujetti au moule dans une relation d'espacement fixe en surplomb par rapport au rebord (11) du moule, et un organe de frottement relié à l'organe de serrage (22) dans une relation de distance variable avec celui-ci,
caractérisé en ce que
l'organe de frottement est un organe de frottement segmenté (21) dans lequel chaque segment d'organe de frottement (211, 212, 213, 214) définit une face de serrage apte à coopérer avec une face du rebord du moule afin de serrer entre elles une feuille (30) destinée à être moulée; et des moyens (231, 241; 232, 242; 233, 243; 234, 244) sont prévus pour faire varier la distance (D) entre l'un au moins des segments (211, 212, 213, 214) de l'organe de frottement et l'organe de serrage (22), pour ainsi faire varier la distance entre l'une au moins des faces de serrage des segments de l'organe de frottement et la face du rebord du moule;
une pression de serrage différentielle pouvant ainsi être exercée sur une feuille (30) au niveau du rebord (11) du moule afin de permettre à la feuille de coulisser d'une manière contrôlée entre l'une au moins des faces de serrage des segments de l'organe de frottement et la face du rebord du moule pendant le moulage de la feuille.

2. Dispositif selon la revendication 1, dans lequel certaines au moins des faces de serrage des segments de l'organe de frottement sont faites d'un matériau permettant un coefficient de frottement faible entre la feuille (30) serrée et la face de serrage du segment, lorsque la pression de serrage exercée sur la feuille est réduite par une réduction contrôlée de la distance entre l'un au moins des segments (211, 212, 213, 214) de l'organe de frottement et l'organe de serrage (22).

3. Dispositif selon la revendication 1 ou 2, dans lequel certaines au moins des faces de serrage de l'organe de frottement sont en résine polie, en métal poli ou en polytétrafluoréthylène.

4. Dispositif selon l'une quelconque des revendications précédentes, dans lequel les moyens pour faire varier la distance entre l'un au moins des segments (211, 212, 213, 214) de l'organe de frottement (21) et l'organe de serrage (22) comprennent un boulon (231, 232, 233, 234) destiné à venir en prise avec un segment (211, 212, 213, 214) de l'organe de frottement (21) et, d'une manière correspondante, avec l'organe de serrage (22), ainsi que deux contre-écrous coopérants (241, 242, 243, 244) destinés à venir en prise avec le boulon (231, 232, 233, 234) de chaque côté de l'organe de serrage (22).

5. Dispositif selon l'une quelconque des revendications précédentes, comprenant des moyens supplémentaires pour faire varier la pression de serrage de l'organe de frottement (21) en totalité ou en partie.

6. Dispositif selon la revendication 5, dans lequel les moyens supplémentaires comprennent une série de moteurs "marche-arrêt" placés autour de l'organe de serrage (22) pour relever et abaisser les segments (211, 212, 213, 214) de l'organe de frottement sélectivement dans la direction du rebord du moule (11).

7. Moule comprenant un dispositif de serrage de feuille (20) selon l'une quelconque des revendications précédentes.

8. Moule selon la revendication 7, dans lequel le dispositif de serrage de feuille (20) est positionné pour être espacé d'une distance égale de la ligne de séparation du moule.

9. Méthode de fabrication d'un objet comprenant une feuille moulée, selon laquelle la feuille (30) destinée à être moulée est serrée en travers de la cavité de moulage (10) d'un moule, ladite méthode consistant à serrer la feuille (30) entre un organe de frottement et le rebord périphérique (11) du moule,
caractérisée en ce que
la méthode est mise en oeuvre à l'aide d'un moule selon la revendication 7 ou 8 et consiste à appliquer une pression de serrage différentielle contrôlée sur la feuille (30) au niveau du rebord (11) du moule en faisant varier la distance entre l'organe de serrage (22) et l'un au moins des segments (211, 212, 213, 214) de l'organe de frottement pour permettre à la feuille de coulisser d'une manière contrôlée entre l'une au moins des faces de serrage des segments de l'organe de frottement et la face du rebord du moule pendant le moulage de la feuille.

10. Méthode selon la revendication 9, dans laquelle après que la feuille (30) a été moulée, un mélange réactif de formation de mousse est placé sur la feuille moulée et autorisé ou contraint à réagir pour former un noyau en mousse élastique fixé à la feuille.
